(19) Europäisches Patentamt
European Patent Office
Office européen des brevets

(11) Veröffentlichungsnummer: **0 247 521 B1**

# (12) EUROPÄISCHE PATENTSCHRIFT

(45) Veröffentlichungstag der Patentschrift: **14.11.90**

(51) Int. Cl.5: **C09D 5/44**

(21) Anmeldenummer: **87107404.3**

(22) Anmeldetag: **21.05.87**

(54) **Wässrige Elektrotauchlackbäder für die kathodische Elektrotauchlackierung und Verfahren zu ihrer Herstellung.**

(30) Priorität: **30.05.86 DE 3618157**

(43) Veröffentlichungstag der Anmeldung: **02.12.87 Patentblatt 87/49**

(45) Bekanntmachung des Hinweises auf die Patenterteilung: **14.11.90 Patentblatt 90/46**

(84) Benannte Vertragsstaaten: **AT BE CH DE ES FR GB IT LI NL SE**

(56) Entgegenhaltungen:
**EP-A- 0 135 810**
**FR-A- 1 504 209**
**US-A- 3 671 412**
**US-A- 4 575 523**

**CHEMICAL ABSTRACTS, Band 90, 1979, Seite 74, Zusammenfassung Nr. 7711z, Columbus, Ohio, US; & JP-A-78 102 341 (NIPPON PAINT CO., LTD) 06-09-1978**

(73) Patentinhaber: **BASF Lacke + Farben Aktiengesellschaft, Max-Winkelmann-Strasse 80, D-4400 Münster(DE)**

(72) Erfinder: **Geist, Michael, Dr., Rubensstrasse 251, D-4400 Münster(DE)**
Erfinder: **Ott, Günther, Dr., Von-Holte Strasse 101a, D-4400 Münster(DE)**
Erfinder: **Schön, Georg, Dr., Schillerstrasse 2, D-4416 Everswinkel(DE)**

**EP 0 247 521 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft wäßrige Elektrotauchlackbäder für die kathodische Elektrotauchlackierung, die als kathodisch abscheidbare Bindemittel modifizierte Epoxid-Aminaddukte enthalten und hergestellt worden sind, indem

(1) (A) Polyepoxide und
(B) Verbindungen, die eine oder mehrere, bevorzugt 2, an aromatische und/ oder (cyclo)aliphatische Molekülfragmente gebundene Hydroxylgruppen pro Molekül enthalten,
in Anwesenheit von aminbasischen Katalysatoren zu epoxidgruppenhaltigen Zwischenprodukten umgesetzt worden sind und
(2) diese Zwischenprodukte anschließend ggf. mit weiteren üblichen Modifizierungsmitteln und schließlich mit
(C) primären und/oder sekundären (Poly)aminen umgesetzt, die so erhaltenen Reaktionsprodukte mit Säuren neutralisiert, in einem wäßrigen Medium dispergiert und diese Dispersion nach gut bekannten Methoden zu Elektrotauchlackbädern weiterverarbeitet worden sind.

Die kationische Elektrotauchlackierung ist ein vor allem zum Grundieren häufig angewandtes Lackierverfahren, bei dem wasserverdünnbare, kationische Gruppen tragende Kunstharze mit Hilfe von Gleichstrom auf elektrisch leitende Körper aufgebracht werden.

Elektrotauchlackbäder des oben beschriebenen Typs sind z.B. in folgenden Patentdokumenten offenbart: US-PS-3,799,854, US-PS-3,984,299, US-PS-4,031,050, US-PS-4,252,703, US-PS-4,332,711 und DE-PS-3108073.

Es ist bekannt, daß mit Lacksystemen dieser Art qualitativ hervorragende Lackierungen erzielt werden können.

Leider enthalten die in Rede stehenden Elektrotauchlackbäder unerwünschterweise auch Chloridionen, die, wenn sie einen von mehreren Parametern abhängigen (z.B. pH-Wert des Elektrotauchlackbades) Konzentrationsgrenzwert überschreiten, eine Korrosion der Elektrotauchanlagen, insbesondere der Anoden (z.B. Lochfraßkorrosion an Edelstahlelektroden) verursachen.

Die störenden Chloridionen stammen in der Hauptsache aus den zur Synthese der Bindemittel als Komponente (A) eingesetzten, mit chlorhaltigen Nebenprodukten verunreinigten Polyepoxiden.

Diese Nebenprodukte können z.B. folgende Strukturelemente enthalten:

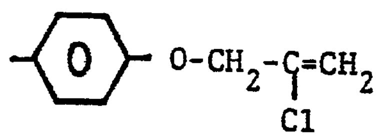

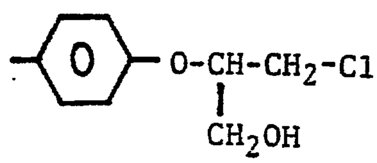

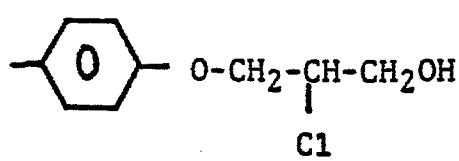

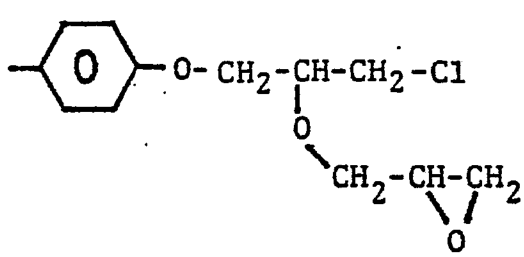

Der Chlorgehalt handelsüblicher Polyepoxide liegt aufgrund der Anwesenheit solcher Nebenprodukte zwischen 0,15 und 0,5 %.

In der DE-AS-2751498 wird beschrieben, daß die Zugabe von Nitrat- und/oder Nitritionen in das Elektrotauchlackbad eine Verminderung der durch die Anwesenheit der Chloridionen verursachten Korrosionsschäden zur Folge hat.

Dieses Verfahren wird ebenso wie eine Reinigung der mit chlorhaltigen Nebenprodukten verunreinigten Polyepoxide in der Praxis aufgrund wirtschaftlicher und/oder technischer Schwierigkeiten nicht durchgeführt.

Die der vorliegenden Erfindung zugrundeliegende Aufgabenstellung besteht darin, Elektrotauchlackbäder des eingangs beschriebenen Typs bereitzustellen, die gegen- über den im Stand der Technik bekannten Bäder geringere Chloridionenkonzentrationen aufweisen.

Diese Aufgabe kann überraschenderweise gelöst werden, indem Elektrotauchlackbäder der oben beschriebenen Art bereitgestellt werden, die dadurch gekennzeichnet sind, daß die aus (A), (B) und (C) gebildeten Reaktionsprodukte vor der Neutralisation mit Säure in einem wäßrigen Medium dispergiert worden sind und anschließend der so erhaltenen Dispersion mindestens ein gegenüber Chloridionen reaktiver Anionenaustauscher zugegeben worden ist, der nach Abschluß der Austauschreaktion abgetrennt worden ist.

Die Erfindung betrifft auch ein Verfahren zur Herstellung wäßriger Elektrotauchlackbäder für die kathodische Elektrotauchlackierung, bei dem

(1) (A) Polyepoxide und
(B) Verbindungen, die eine oder mehrere, bevorzugt 2, an aromatische und/oder (cyclo)aliphatische Molekülfragmente gebundene Hydroxylgruppen pro Molekül enthalten,
in Anwesenheit von aminbasischen Katalysatoren zu epoxidgruppenhaltigen Zwischenprodukten umgesetzt werden und
(2) diese Zwischenprodukte anschließend ggf. mit weiteren üblichen Modifizierungsmitteln und schließlich mit (C) primären und/oder sekundären (Poly)aminen umgesetzt, die so erhaltenen Reaktionsprodukte mit Säuren neutralisiert, in einem wäßrigen Medium dispergiert und diese Dispersionen nach gut bekannten Methoden zu Elektrotauchlackbädern weiterverarbeitet werden, das dadurch gekennzeichnet ist, daß die aus (A), (B) und (C) gebildeten Reaktionsprodukte vor der Neutralisation mit Säure in einem wäßrigen Medium dispergiert werden und anschliessend der so erhaltenen Dispersion mindestens ein gegenüber Chloridionen reaktiver Anionenaustauscher zugegeben wird, der nach Abschluß der Austauschreaktion abgetrennt wird.

Zur Herstellung der erfindungsgemäßen Elektrotauchlackbäder wird das kathodisch abscheidbare Bindemittel nach gut bekannten Methoden in einem vorwiegend aus organischen Lösungsmitteln bestehenden Reaktionsmedium synthetisiert.

Dabei werden zunächst einmal aus den Komponenten (A) und (B) unter aminbasischer Katalyse epoxidgruppenhaltige Zwischenprodukte hergestellt.

Als Komponente (A) können alle Verbindungen eingesetzt werden, deren Moleküle im Durchschnitt mehr als 1 Epoxidgruppe enthalten. Bevorzugt sind solche Verbindungen, die 2 Epoxidgruppen im Molekül enthalten und ein relativ niedriges Molekulargewicht von höchstens 750, bevorzugt 350-500, haben.

Besonders bevorzugte Epoxidverbindungen sind aus Polyphenolen und Epihalohydrinen hergestellte Polyglycidylether von Polyphenolen. Als Polyphenol kann bevorzugt Bisphenol A eingesetzt werden.

Es können auch Polyglycidylester von Polycarbonsäuren eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten alicyclischen Verbindung erhält.

Als Komponente (B) werden Verbindungen eingesetzt, die eine oder mehrere, bevorzugt 2, an aromatische und/oder (cyclo)aliphatische Molekülfragmente gebundene Hydroxylgruppen pro Molekül enthalten.

Die als Komponente (B) in Betracht kommenden Verbindungen schließen sowohl nieder- als auch hochmolekulare Verbindungen ein.

Geeignete niedermolekulare (B)-Komponenten bestehen aus phenolischen, aliphatischen und/oder alicyclischen polyfunktionellen Alkoholen mit einem Molekulargewicht unter 350.

Als Beispiele seien genannt:
Diole, wie Ethylenglykol, Dipropylenglykol, Triglykol, 1,2-Propandiol, 1,3-Propandiol, 2,2-Dimethyl-1,3-propandiol, 2-Methyl-2-propyl-1,3-propandiol, 1,2-Butandiol, 1,4-Butandiol, 2-Ethyl-1,4-butandiol, Buten-2-diol-1,4, 1,2-Pentandiol, 1,5-Pentandiol, 3-Methyl-1,5-pentandiol, 1,6-Hexandiol, 2-Hydroxyethylhydroxyacetat, 2,2-Dimethyl-3-hydroxypropyl-2,2-dimethylhydroxypropionat, 4,4'Methylen-biscyclohexanol und 4,4'-Isopropylidenbiscyclohexanol. Einige bevorzugte Diole sind 2,2-Dimethyl-1,3-propandiol und 3-Methyl-1,5-pentandiol.

Beispiele für höhermolekulare (B)-Komponenten sind Polyesterpolyole, Polyetherpolyole oder Polycaprolactonpolyole verschiedener Funktionalität und Molekulargewichte.

Für die Komponente (B) geeignete Polyalkylenetherpolyole entsprechen der allgemeinen Formel:

$$H-\left[O-(CHR)_n\right]_m-OH$$

in der R = Wasserstoff oder ein niedriger Alkylrest, ggf. mit verschiedenen Substituenten, ist, n = 2-6 und m = 3-50 oder noch höher ist. Beispiele sind Poly(oxytetramethylen)glykole und Poly(oxyethylen)-glykole.

Die bevorzugten Polyalkylenetherpolyole sind Poly(oxytetramethylen)glykole mit einem Molekulargewicht im Bereich von 350-1000.

Polyesterpolyole können ebenfalls als (B)-Komponenten verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2-18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure und Glutarsäure. Anstelle dieser Säuren können auch ihre Anhydride, soweit diese existieren, verwendet werden.

Ferner lassen sich auch Polyesterpolyole, die sich von Lactonen ableiten, als Komponente (B) benutzen. Diese Produkte erhält man durch die Umsetzung eines ε-Caprolactons mit einem Polyol. Solche Produkte sind in der US-PS-3,169,945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{O}{\overset{\|}{C}}-(CHR)_n-CH_2O-$$

entsprechen, in der n mindestens 4, bevorzugt 4-6, ist und der Substituent Wasserstoff, ein Alkylrest, ein Cycloalkylrest oder ein Alkoxyrest ist.

Als aminbasische Katalysatoren können prinzipiell alle ein oder mehrere basische Stickstoffatome enthaltenden Verbindungen eingesetzt werden.

Bevorzugterweise werden tertiäre Amine, wie z.B. N,N-Dimethylbenzylamin, Tributylamin, Dimethylcyclohexylamin und Dimethyl-$C_{12}/C_{14}$-amin ($C_{12}/C_{14}$ steht für eine 12-14 C Atome enthaltende aliphatische Kette) verwendet.

Der aminbasische Katalysator wird in der Regel in einer Menge von 0,1-2 Gew.-%, bezogen auf das aus den Komponenten (A) und (B) entstehende Zwischenprodukt, eingesetzt.

Die Reaktion zwischen den Komponenten (A) und (B) wird bei Temperaturen zwischen 100 und 190 °C, vorzugsweise zwischen 115 und 185 °C, vorzugsweise zwischen 115 und 185 °C, durchgeführt.

Die aus den Komponenten (A) und (B) entstandenen epoxidgruppenhaltigen Zwischenprodukte werden mit weiteren üblichen, keine aminbasischen Katalyse erfordernden, Modifizierungsmitteln und anschließend mit der Komponente (C) umgesetzt.

Als Komponente (C) können primäre und/oder sekundäre Amine verwendet werden, wobei die sekundären Amine besonders bevorzugte Komponenten (C) sind.

Bevorzugt sollte das Amin eine in Wasser lösliche Vergindung sein. Beispiele solcher Amine sind Mono- und Dialkylamine, wie Methylamin, Ethylamin, Propylamin, Butylamin, Dimethylamin, Diethylamin, Dipropylamin, Methylbutylamin udgl. Geeignet sind ebenfalls Alkanolamine, wie z.B. Methylethanolamin, Diethanolamin, udgl. Ferner sind Dialkylaminoalkylamine, wie z.B. Dimethylaminoethylamin, Diethylaminopropylamin, Dimethylaminopropylamin udgl. geeignet. In den meisten Fällen werden niedermolekulare Amine verwendet, doch ist es auch möglich höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Reaktion zwischen Aminen und epoxidgruppenhaltigen Verbindungen springt häufig schon bei Vermischen der Reaktionspartner an. Je nach gewünschtem Reaktionsverlauf - vor allem zur Vervollständigung der Umsetzung - ist es empfehlenswert, die Reaktionstemperatur auf 50- 150 °C zu erhöhen.

Nach Umsetzung der aus den Komponenten (A) und (B) gebildeten Zwischenprodukte mit der Komponente (C) wird die erhaltene Harzlösung in Abwesenheit von Säure in einem wäßrigen Medium dispergiert.

Es wird eine instabile Dispersion erhalten, die überraschenderweise fein verteilt, gut rührbar und auch gut filtrierbar ist. Diese Dispersion wird gegebenenfalls auf 40 bis 50 °C abgekühlt und anschließend mit mindestens einem gegenüber Chloridionen reaktiven Anionenaustaucher versetzt.

Die in Rede stehende Dispersion wird vorteilhafterweise unter Verwendung eines Teiles der zur Herstellung des fertigen Lackes notwendigen Wassermenge hergestellt und sowohl vor der Zugabe des Anionenaustauschers als auch während des Austauschprozesses gerührt.

Bei dem erfindungsgemäßen Verfahren können im Prinzip alle bekannten gegenüber den in der behandelten Dispersion vorhandenen Bindemittelvorprodukten inerten Anionenaustauscher eingesetzt werden.

Die Trennung Bindemittelvorproduktdispersion/Anionenaustauscher kann nach einem beliebigen Verfahren durchgeführt werden; bevorzugt wird jedoch mit Hilfe einer technisch einfach durchzuführenden Filtration getrennt.

Es war überraschend und nicht vorhersehbar, daß bei dem erfindungsgemäßen Verfahren Dispersionen erhalten werden, aus denen der Anionenaustauscher ohne nennenswerte technische Schwierigkeiten leicht abtrennbar ist.

Die in dem erfindungsgemäßen Verfahren einsetzbaren Anionenaustauscher können Anionenaustauscher auf Kunstharzbasis sein, die als Träger der basischen Eigenschaften primäre, sekundäre oder tertiäre Aminogruppen, quarternäre Ammoniumgruppen oder in einer Ringstruktur integrierten Stickstoff enthalten.

Als Beispiele seien vernetzte Polykondensationsprodukte aus Aminen bzw. Phenolen und Formaldehyd sowie vernetzte, basische Gruppen enthaltende Styrolpolymerisate genannt.

Bevorzugt werden in Perlform vorliegende vernetzte basische Gruppen enthaltende Styrolpolymerisate eingesetzt.

Der Anionenaustauscher wird in einer solchen Menge zugegeben, daß die Gesamtaustauschkapazität 5 bis 20 mal höher ist als die in der Dispersion enthaltene Chloridionenmenge.

Der Austauschprozeß ist in der Regel nach 10 bis 60 Minuten abgeschlossen. Danach wird der Ionenaustauscher von der gereinigten Dispersion vorzugsweise durch Filtration abgetrennt und der Ionenaustauscher steht nach Regeneration für einen erneuten Reinigungszyklus zur Verfügung.

Nach Abtrennung des Ionenaustauschers wird die Dispersion durch Zugabe von wasserlöslichen Säuren (z.B. Ameisensäure, Milchsäure, Propionsäure) stabilisiert und nach gut bekannten Methoden zu einem wäßrigen Elektrotauchlack weiterverarbeitet.

Die erfindungsgemäßen Elektrotauchlackbäder können übliche Zusätze, wie z.B. Vernetzer, koaleszierende Lösemittel, Pigmente, oberflächenaktive Mittel, Vernetzungskatalysatoren, Antioxydantien, Füllstoffe, Antischaummittel usw., enthalten.

Mit Hilfe des technisch einfach durchzuführenden erfindungsgemäßen Verfahrens können Elektrotauchlackbäder erhalten werden, die einen Chloridionengehalt aufweisen, der deutlich unter dem liegt, der in vergleichbaren Elektrotauchlackbädern gefunden wird, bei deren Herstellung die erfindungsgemäße Maßnahme nicht durchgeführt worden ist.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1

Herstellung eines Bindemittels gemäß EP 70 550, Beispiel B

| | Einwaage (g) |
|---|---|
| - Epikote 829 1) | 727,6 |
| - Capa 200 2) | 268,4 |
| - Xylol | 36,1 |
| - Bisphenol A | 197,8 |
| - Dimethylbenzylamin | 3,8 |
| - Isocyanatvernetzer 3) | 901,3 |
| - Diketimin aus MIBK und Diethylentriamin 75 %ig in MIBK | 73,4 |
| - N-Methylethanolamin | 59,1 |
| - Hexylglykol | 76,5 |
| - Essigsäure | 33,5 |
| - Emulgatormischung 4) | 29,4 |
| - Deionisiertes Wasser | 1793,1 |

1) Epoxidharz auf Basis von Bisphenol A der Shell Chemie, Epoxidäquivalent 188
2) Polycaprolactondiol der Interox Chemical
3) Isocyanatvernetzer auf Basis Toluylendiisocyanat mit Butylglykolverkappung und Umsetzung mit Trimethylolpropan im Verhältnis 3 : 1, angelöst in einer Mischung aus MIBK und n-Butanol (9 : 1) zu 70 % Festkörper.
4) Emulgatorgemisch auf Basis von Geigy Amin C ® Geigy Industrial Chemicals) 120 Teile, Surfynol 104 ® (Air Products and Chemicals) 120 Teile, Butylglykol 120 Teile und 221 Teile deionisiertes Wasser mit 19 Teilen Eisessig.
MIBK = Methylisobutylketon

Herstellungsvorschrift

Epikote 829, Capa 200 und Xylol werden in einem Reaktionsgefäß vorgelegt und unter $N_2$-Schutzgas auf 210 °C erhitzt. Während einer halben Stunde wird dann Wasser ausgekreist. Danach kühlt man den Ansatz auf 150 °C ab, gibt Bisphenol A und 1,6 Teile Dimethylbenzylamin zu. Man erhitzt dann auf 180 °C und hält diese Temperatur eine halbe Stunde. Danach kühlt man auf 130 °C und gibt die Restmenge Dimethylbenzylamin zu. Danach hält man die Temperatur für 2 ¼ Stunden, gibt dann den Isocyanatvernetzer, das Diketimin und N-Methylethanolamin zu und hält dann die Temperatur für eine halbe Stunde bei 110 °C. Danach fügt man des Hexylglykol zu. Die Reaktionsmischung wird dann in dem deionisierten Wasser, das Eisessig und Emulgatorgemisch enthält, dispergiert. Anschließend wird Vakuum angelegt, um die leicht flüchtigen organischen Lösemittel zu entfernen. Es wird ein Festkörper von 36 % eingestellt.

In dieser Dispersion wird nun der Chloridgehalt argentometrisch bestimmt. Er liegt bei 63 ppm Chlorid.

Beispiel 2

Die Bindemittelherstellung von Beispiel 1 wird wiederholt. Jedoch wird die Reaktionsmischung zunächst nur in 950 g Wasser dispergiert und auf 45 °C gekühlt. Dann werden 45 ml eines handelsüblichen Anionenaustauschers in $OH^-$-Form (Dowex 1X2 ®, Korngröße 50 bis 100 µm zugegeben. Nach 30 Minuten wird der Anionenaustauscher abfiltriert. Man setzt jetzt die Essigsäure und das Emulgatorgemisch zu und mischt 15 Minuten unter. Anschließend werden die restlichen 843 g Wasser zugegeben. Die argentometrische Chloridbestimmung ergibt für diese Dispersion einen Wert von 29 ppm Chlorid.

Beispiel 3

Herstellung eines Bindemittels gemäß DE-PS-3108073, Beispiel 2

In einem Reaktionsgefäß werden 1093 Teile Araldit GY 2600 (Epoxidäquivalentgewicht EEW = 188, Epoxidharz auf Basis von Bisphenol A der Ciba Geigy), 151 Teile Neopentylglykol und 4,9 Teile Dimethylbenzylamin vorgelegt. Die Temperatur wird auf 131 °C angehoben und gehalten, bis ein EEW von 415 erreicht ist. Danach gibt man 398 Teile Capa 200 (s. Beispiel 1) und weitere 3,8 Teile Dimethylbenzylamin zu. Man hält die Temperatur bei 131 °C, bis ein EEW von 1030 erreicht ist. Danach fügt man 1274 Teile des Vernetzers (s. Beispiel 1) und 112 Teile des ebenfalls in Beispiel 1 erwähnten Diketimins sowie 86 Teile N-Methylethanolamin zu und hält die Temperatur für 1 Stunde bei 112 °C. Dann mischt man 135 Teile Phenoxypropanol und 40 Teile Methoxypropanol zu und mischt 15 Minuten unter. Diese Harzlösung wird in 3247 Teilen Wasser, 23,5 Teilen Eisessig und 21 Teilen Emulgator gemisch (s. Beispiel 1) dispergiert.

Anschließend entfernt man im Vakuum die niedersiedenden Lösemittel und stellt einen Festkörper von 35 % ein.

Der argentometrisch bestimmte Chloridgehalt dieser Dispersion liegt bei 127 ppm Chlorid.

Beispiel 4

Die Bindemittelherstellung von Beispiel 3 wird wiederholt. Jedoch wird die Harzlösung zunächst nur in 1800 g Wasser dispergiert. Nach Kühlen auf 40 °C werden 60 ml des in Beispiel 2 beschriebenen Anionenaustauschers untergemischt. Der Anionenaustauscher wird nach 45 Minuten abfiltriert. Die Dispersion wird dann mit Eisessig, Emulgatormischung und restlicher Wassermenge wie beschrieben aufgearbeitet.

Die argentometrische Chloridbestimmung ergibt für diese Dispersion einen Wert von 61 ppm Chlorid.

## Patentansprüche

1. Wäßrige Elektrotauchlackbäder für die kathodische Elektrotauchlackierung, die als kathodisch abscheidbare Bindemittel modifizierte Epoxid-Aminaddukte enthalten und hergestellt worden sind, indem

(1) (A) Polyepoxide und

(B) Verbindungen, die eine oder mehrere, bevorzugt 2, an aromatische und/oder (cyclo)aliphatische Molekülfragmente gebundene Hydroxylgruppen pro Molekül enthalten.

in Anwesenheit von aminbasischen Katalysatoren zu epoxidgruppenhaltigen Zwischenprodukten umgesetzt worden sind und

(2) diese Zwischenprodukte anschließend ggf. mit weiteren üblichen Modifizierungsmitteln und schließlich mit

(C) primären und/oder sekundären (Poly)aminen umgesetzt, die so erhaltenen Reaktionsprodukte mit Säure neutralisiert , in einem wäßrigen Medium dispergiert und diese Dispersion nach gut bekannten Methoden zu Elektrotauchlackbädern weiterverarbeitet worden sind,

dadurch gekennzeichnet, daß

die aus (A), (B) und (C) gebildeten Reaktionsprodukte vor der Neutralisation mit Säure in einem wäßrigen Medium dispergiert worden sind und anschließend der so erhaltenen Dispersion mindestens ein gegenüber Chloridionen reaktiver Anionenaustauscher zugegeben worden ist, der nach Abschluß der Austauschreaktion abgetrennt worden ist.

2. Ein Verfahren zur Herstellung wäßriger Elektrotauchlackbäder für die kathodische Elektrotauchlackierung, bei dem

(1) (A) Polyepoxide und

(B) Verbindungen, die eine oder mehrere, bevorzugt 2, an aromatische und/oder (cyclo)aliphatische Molekülfragmente gebundene Hydroxylgruppen pro Molekül enthalten,

in Anwesenheit von aminbasischen Katalysatoren zu epoxidgruppenhaltigen Zwischenprodukten umgesetzt werden und

(2) diese Zwischenprodukte anschließend ggf. mit weiteren üblichen Modifizierungsmitteln und schließlich mit

(C) primären und/oder sekundären (Poly)aminen umgesetzt, die so erhaltenen Reaktionsprodukte mit Säure neutralisiert, in einem wäßrigen Medium dispergiert und diese Dispersion nach gut bekannten Methoden zu Elektrotauchlackbädern weiterverarbeitet werden,

dadurch gekennzeichnet, daß

die aus (A), (B) und (C) gebildeten Reaktionsprodukte vor der Neutralisation mit Säure in einem wäßrigen Medium dispergiert werden und anschließend der so erhaltenen Dispersion mindestens ein gegenüber Chloridionen reaktiver Anionenaustauscher zugegeben wird, der nach Abschluß der Austauschreaktion agbetrennt wird.

3. Wäßrige Elektrotauchlackbäder oder Verfahren nach einem der Ansprüche 1 bis 2,

dadurch gekennzeichnet, daß

der Anionenaustauscher in einer solchen Menge zugegeben worden ist, bzw. wird, daß die Gesamtaustauschkapazität 5 bis 20 mal höher ist als die in der Dispersion enthaltene Chloridionenmenge.

4. Wäßrige Elektrotauchlackbäder oder Verfahren nach einem der Ansprüche 1 bis 3,
dadurch gekennzeichnet, daß
der zugegebene Anionenaustauscher nach Abschluß der Austauschreaktion durch Filtration abgetrennt worden ist bzw. wird.

## Claims

1. Aqueous electrocoating baths for cathodic electro-coating which contain, as cathodically depositable binders, modified epoxide-amine adducts and have been prepared by reacting
(1)
(A) polyepoxides and
(B) compounds which contain one or more, preferably 2, hydroxyl groups bonded to aromatic and/or (cyclo)aliphatic molecule fragments per molecule,
in the presence of basic amine catalysts to form epoxy-containing intermediates and
(2) subsequently reacting these intermediates optionally with further customary modifiers and finally with
(C) primary and/or secondary (poly)amines, neutralizing the reaction products thus obtained with acid, dispersing the products in an aqueous medium and further processing this dispersion into electro-coating baths using well-known methods,
wherein the reaction products formed from (A), (B) and (C) have been dispersed in an aqueous medium before the neutralization with acid and subsequently the dispersion thus obtained has added to it at least one anion exchanger which is reactive toward chloride ions and which was separated off on conclusion of the exchange reaction.
2. A process for preparing aqueous electrocoating baths for cathodic electrocoating by reacting
(1)
(A) polyepoxides and
(B) compounds which contain one or more, preferably 2, hydroxyl groups bonded to aromatic and/or (cyclo)aliphatic molecule fragments per molecule
in the presence of basic amine catalysts to give epoxy-containing intermediates and
(2) subsequently reacting these intermediates optionally with further customary modifiers and finally with
(C) primary and/or secondary (poly)amines,
neutralizing the reaction products thus obtained with acid, dispersing the products in an aqueous medium and further processing this dispersion using well-known methods into electrocoating baths,
which comprises dispersing the reaction products formed from (A), (B) and (C) in an aqueous medium before the neutralization with acid and subsequently adding to the dispersion thus obtained at least one anion exchanger which is reactive toward chloride ions and which is separated off on conclusion of the exchange reaction.
3. Aqueous electrocoating baths or process as claimed in either of claims 1 and 2, wherein the anion exchanger was or is added in such an amount that the total exchange capacity is 5 to 20 times higher than the amount of chloride ions contained in the dispersion.
4. Aqueous electrocoating baths or process as claimed in any one of claims 1 to 3, wherein the anion exchanger added was or is separated off by filtration on conclusion of the exchange reaction.

## Revendications

1. Bains aqueux de laques d'électrodéposition pour le laquage par électrodéposition cathodique, qui contiennent, comme liants pouvant être déposés à la cathode, des produits d'addition époxyde-amine et qui ont été obtenus
(1) en faisant réagir
(A) des polyépoxydes et
(B) des composés, qui contiennent, par molécule, un ou plusieurs, de préférence 2, groupes hydroxyle liés à des fragments de molécules aromatiques et/ou (cyclo)aliphatiques,
en présence de catalyseurs aminobasiques, pour obtenir des produits intermédiaires à teneur en groupes époxyde, et
(2) en faisant réagir ensuite ces produits intermédiaires le cas échéant avec d'autres agents modificateurs usuels et, en définitive, avec (C) des (poly)amines primaires et/ou secondaires, en neutralisant les produits de réaction ainsi obtenus par un acide, en le dispersant dans un milieu aqueux et en transformant cette dispersion, selon des procédés bien connus, en bains de laques d'électrodéposition,
caractérisés par le fait que les produits de réaction formés à partir de (A), (B) et (C) ont été dispersés, avant la neutralisation par un acide, dans un milieu aqueux, puis que la dispersion ainsi obtenue a été additionnée d'au moins un échangeur d'anions réactif vis-à-vis des anions chlorure, qui a été séparé après l'achèvement de la réaction d'échange.

2. Procédé de fabrication de bains aqueux de laques d'électrodéposition pour le laquage par électrodéposition cathodique, suivant lequel :

(1) on fait réagir

(A) des polyépoxydes et

(B) des composés, qui contiennent, par molécule, un ou plusieurs, de préférence 2, groupes hydroxyle liés à des fragments de molécules aromatiques et/ou (cyclo)aliphatiques,

en présence de catalyseurs amino-basiques, pour obtenir des produits intermédiaires à teneur en groupes époxyde et

(2) on fait réagir ensuite ces produits intermédiaires le cas échéant avec d'autres agents modificateurs usuels et, en définitive, avec

(C) des (poly)amines primaires et/ou secondaires, on neutralise les produits de réaction ainsi obtenus par un acide, on les disperse dans un milieu aqueux, et on transforme cette dispersion, selon des procédés bien connus, en bains de laquage d'électrodéposition,

caractérisé par le fait que les produits de réaction formés à partir de (A), (B) et (C) sont dispersés, avant la neutralisation par un acide, dans un milieu aqueux, puis que la dispersion ainsi obtenue est additionnée d'au moins un échangeur d'anions réactif vis-à-vis des ions chlorure, qui est séparé après l'achèvement de la réaction d'échange.

3. Bains aqueux de laques d'électrodéposition ou procédé selon l'une des revendications 1 et 2, caractérisé(s) par le fait que l'échangeur d'anions a été, ou est, ajouté dans une quantité telle que la capacité totale d'échange soit de 5 à 20 fois plus grande que la quantité d'ions chlorure contenue dans la dispersion.

4. Bains aqueux de laques d'électrodéposition ou procédé selon l'une des revendications 1 à 3, caractérisé(s) par le fait que l'échangeur d'anions ajouté après l'achèvement de la réaction d'échange a été, ou est, séparé par filtration.